Europäisches Patentamt

European Patent Office

Office européen des brevets

(11) Veröffentlichungsnummer: **0 168 770**
A2

# EUROPÄISCHE PATENTANMELDUNG

(21) Anmeldenummer: 85108599.3

(22) Anmeldetag: 10.07.85

(51) Int. Cl.⁴: **H 04 B 9/00,** H 04 L 11/16, H 04 L 25/49

(30) Priorität: 19.07.84 DE 3426683

(43) Veröffentlichungstag der Anmeldung: 22.01.86 Patentblatt 86/4

(84) Benannte Vertragsstaaten: CH DE FR GB LI

(71) Anmelder: Siemens Aktiengesellschaft, Berlin und München Wittelsbacherplatz 2, D-8000 München 2 (DE)

(72) Erfinder: Bodlaj, Viktor, Dipl.-Ing. Dr., Werinherstrasse 69, D-8000 München 90 (DE)
Erfinder: Moustakas, Steven, Dr., Schellingstrasse 19, D-8000 München 40 (DE)
Erfinder: Witte, Hans-Hermann, Dipl.-Phys. Dr. rer. nat., Hippelstrasse 15, D-8000 München 90 (DE)

(54) Optischer Datenbus mit statistischem Zugriffsverfahren.

(57) Es wird ein optischer Datenbus mit statistischem Zugriffsverfahren zur Übertragung von Daten zwischen Sendern und Empfängern in Form von NRZ-Daten beschrieben. Jeder Sender eines Teilnehmers enthält einen Manchesterkodierer, der die NRZ-Daten manchesterkodiert und so auf dem Bus absetzt. Der Empfänger jedes Teilnehmers enthält zur Wiedergewinnung der NRZ-Daten aus den manchesterkodierten Daten einen Manchesterdekodierer und eine Taktrückgewinnungseinrichtung, die den in den manchesterkodierten Daten enthaltenen Takt rückgewinnt. Ein derartiger Manchesterdekodierer mit der Taktrückgewinnungseinrichtung kann sehr einfach aufgebaut werden, und ein derartiger einfacher Aufbau ist beschrieben. Auch eine sehr einfach aufgebaute Buszustandserkennungseinrichtung ist beschrieben.

0168770

SIEMENS AKTIENGESELLSCHAFT          Unser Zeichen
Berlin und München                  VPA  84 P 1 5 2 1 E

Optischer Datenbus mit statistischem Zugriffsverfahren

Die vorliegende Erfindung betrifft einen optischen
Datenbus mit statistischem Zugriffsverfahren nach dem
Oberbegriff des Patentanspruchs 1.

Ein Datenbus der genannten Art ist bereits in der älteren Patentanmeldung VPA 82 P 1509 vorgeschlagen worden.
Ein konkretes Beispiel für ein statistisches oder asynchrones Zugriffsverfahren ist das CSMA/CD-Zugriffsverfahren (Carrier Sense Multiple Access Collision
Detection, siehe Comm. of the ACM, Juli 1976, Vol. 19,
Nr. 7, Seiten 395 bis 404).

Bei dem vorgeschlagenen Datenbus ist die Bitrate auf der
Übertragungsstrecke gleich der zu übertragenden
Daten-Bitrate. Der einem Sender zugeordnete Kodierer
besteht aus einem Scrambler, der a) zur Rückgewinnung
des Taktes im Empfänger und b) zur logischen Unterscheidung des Zustandes "nicht Daten senden" vom Zustand
"Daten senden" benötigt wird. Der Dekodierer besteht aus
einem Descrambler. Dem Anfang der Nutzdaten sind sog.
Kopf-Bits voranzustellen und das Ende der Nutzdaten wird
durch Datenende-Markierungsbits in Form einer bestimmten
Bitfolge markiert. Der Takt wird beispielsweise durch
eine PLL-Schaltung aus der in einen Empfänger einlaufenden Bitfolge zurückgewonnen. Die Empfängersteuerung ist
so aufgebaut, daß nach der Kopf-Bitfolge der richtige
Takt zurückgewonnen ist, und die Kopfbits und die Datenende-Markierungsbits von den eigentlichen Nutzdaten
abgetrennt werden.

Ed 1 Sti/15.7.1984

Aufgabe der vorliegenden Erfindung ist es, bei einem optischen Datenbus der genannten Art, insbesondere mit CSMA/CD-Zugriffsverfahren möglichst einfache Steuerschaltungen für den Kommunikationsteil zu erhalten.

Diese Aufgabe wird durch die im kennzeichnenden Teil des Patentanspruchs 1 angegebenen Merkmale gelöst.

Dieser Lösung ist demnach das an sich bekannte Prinzip, die Nutzdaten manchesterartig zu kodieren, zugrundegelegt, um dadurch wieder einfach den Takt im Empfänger zurückzugewinnen.

Diese Kodierungsart ermöglicht es, die Steuerschaltungen im Senderteil, im Empfängerteil und auch in einem Kollisionserkennungsteil zu vereinfachen und mit weniger Bausteinen aufzubauen. Auch sind keine Markierungen für den Anfang und das Ende der Nutzdaten erforderlich, die im Empfängerkreis von den Nutzdaten wieder abgetrennt werden müssen.

Der erfindungsgemäße Datenbus benötigt doppelt so viel Bandbreite wie der genannte vorgeschlagene Datenbus. Sein Aufbau ist jedoch einfacher und damit weniger störanfällig. Er kann überall dort vorteilhaft realisiert werden, wo das optische Übertragungssystem mit Sendern, Fasern und Empfängern noch so viel Reserve enthält, daß man das System mit 100 % Redundanz betreiben kann.

Eine besonders einfache und vorteilhafte Ausgestaltung des erfindungsgemäßen Datenbusses geht aus dem Anspruch 2 hervor, bei welcher der Manchesterdekodierer lediglich zwei D-Flipflops, zwei EXOR-Gatter, drei Verzögerungsleitungen und einen Inverter benötigt.

0168770

Eine bevorzugte Ausführungsform des Datenbusses nach Anspruch 2 ist im Anspruch 3 angegeben.

Die durch den Manchesterdekodierer eines erfindungsgemäßen Datenbusses nach Anspruch 2 oder 3 wiedergewonnenen NRZ-Daten sind gegenüber dem in den zugeführten Daten enthaltenen Takt etwas phasenverschoben. Zur Beseitigung dieser Phasenverschiebung ist es zweckmäßig, einen derartigen Datenbus entsprechend dem Anspruch 4 zu gestalten.

Diese Ausführungsform nach Anspruch 4 hat zudem den Vorteil, daß die Taktrückgewinnungseinrichtung durch lediglich ein zusätzliches EXOR-Gatter realisiert werden kann, das so geschaltet ist, wie es im Anspruch 5 angegeben ist.

Durch die Taktrückgewinnungseinrichtung, insbesondere nach Anspruch 5 läßt sich auch das Validsignal sehr einfach mit einem monostabilen Multivibrator nach Anspruch 6 zurückgewinnen.

Bei einem erfindungsgemäßen Datenbus läßt sich auch eine Buszustandserkennungseinrichtung sehr einfach realisieren. Ein derartiger Datenbus ist im Anspruch 7 angegeben.

Bevorzugte und vorteilhafte Ausgestaltungen der Buszustandserkennungseinrichtung eines Datenbusses nach Anspruch 7 gehen aus den Ansprüchen 8 bis 11 hervor.

Ein Schaltungsaufbau für die Übertragung der manchesterkodierten Daten wird anhand der Figuren in der folgenden Beschreibung näher erläutert. Von den Figuren zeigen:
Figur 1 ein Blockschaltbild, das den prinzipiellen Aufbau der Übertragung von manchesterkodierten Daten über optische Sternbusse bzw. -netze darstellt;

Figur 2 ein Impulsdiagramm über der Zeit t, das bei I Taktimpulse, bei II eine mit diesen Taktimpulsen getaktete NRZ-Daten in Form einer willkürlich gewählten, NRZ-kodierten Bitfolge und bei III die gleiche manchesterkodierte Bitfolge zeigt, die von dem Manchesterkodierer in Figur 1 aus den NRZ-Daten erzeugt wird, wobei die Bitfolge zwischen II und III als 0-1-Folge dargestellt ist;

Figur 3 den konkreten Aufbau eines Spannungskomparator/ Manchesterdekodierers in Figur 1 für die Wiedergewinnung der NRZ-Daten, des Taktes und des Validsignals aus dem Manchesterdekodierer nach Figur 1 zurückgewonnen werden;

Figur 4 ein Impulsdiagramm, das die Ein- oder Ausgangssignale an den verschiedenen bezeichneten Ein- und Ausgängen in der Figur 3 zeigt, soweit sie für das Verständnis der Arbeitsweise des Spannungskomparators/Dekodierers erforderlich sind; und

Figur 5 einen optischen Sternbus mit einem Bus nach Figur 1 und einer Buszustandskontrollschaltung, mit der festgestellt werden kann, ob der Bus frei oder belegt ist oder ob eine Datenkollision stattfindet.

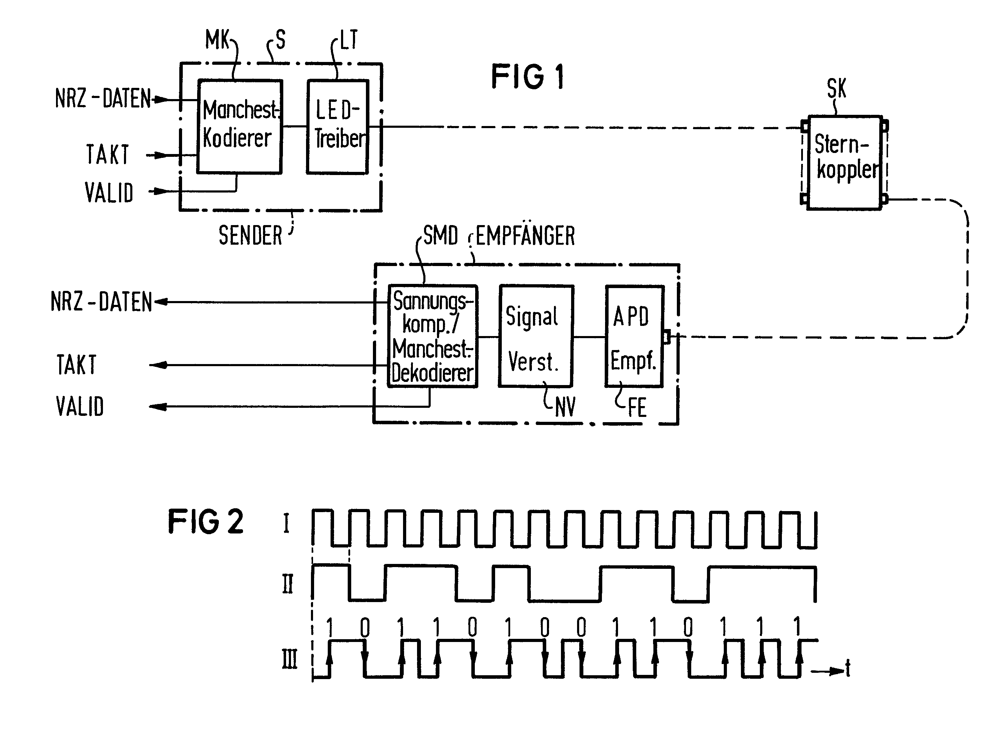

Der Schaltungsaufbau nach Figur 1 besteht aus mehreren Sendern S, von denen nur einer dargestellt ist, aus dem Sternkoppler SK und mehreren Empfängern E, von denen ebenfalls nur einer dargestellt ist. Der Sender S enthält einen Manchesterkodierer MK und einen nachgeschalteten LED-Treiber LT, der eine LED (lichtemittierende Diode, beispielsweise Laserdiode) antreibt. Dem Manchesterkodierer MK werden der Takt und die NRZ-Daten zugeführt, aus denen er die manchesterködierten Daten erzeugt, die dem LED-Treiber LT zugeführt werden. Die Manchesterkodierung kann aus dem Takt und den NRZ-Daten beispielsweise mit Hilfe eines EXOR-Gatters erhalten werden.

In der Figur 2 ist der Gang der Manchesterkodierung beispielhaft dargestellt.

Die dem LED-Treiber LT zugeführten manchesterkodierten Daten werden über eine optische Faser dem Sternkoppler SK zugeführt. Über andere Fasern werden sie vom Sternkoppler SK den Empfängern E zugeführt. In jedem Empfänger E wird die manchesterkodierte Nachricht von einem Fotoempfänger FE empfangen. Als Fotoempfänger FE kann eine PIN- oder APD-Diode genommen werden. Das von dem Fotodiodenempfänger FE erzeugte manchesterkodierte Signal wird einem im Fotodiodenempfänger vorgesehenen und nicht dargestellten Fotodiodenverstärker zugeführt, der bei der Manchesterkodierung der Daten ein AC-Verstärker (wechselstromgekoppelter Verstärker) mit relativ geringer Bandbreite sein kann. Die geringe Bandbreite des Fotodiodenverstärkers ergibt ein gutes Signal/ Rauschverhältnis, was für schwache Fotodiodensignale von großem Vorteil ist. Die im Fotodiodenempfänger FE vorverstärkten Signale werden einem Nachverstärker NV zugeführt, um sie auf einen Pegel zu verstärken, der zur Umwandlung in TTL-Signale mit Hilfe eines Spannungskomparators benötigt wird, der in einem im Empfänger E vorgesehenen Spannungskomparator/Manchesterdekodierer SD für die Wiedergewinnung der NRZ-Daten, des Taktes und des Validsignals enthalten ist.

Die auf den TTL-Pegel umgewandelten Signale werden im Manchesterdekodierer MD des Spannungskomparator/Manchesterdekodierers SMD dekodiert. Der Spannungskomparator/Manchesterdekodierer SMD ist so aufgebaut, daß nicht nur die NRZ-Daten zurückgewonnen werden, sondern auch der Takt, der zur Verarbeitung der Daten benötigt wird.

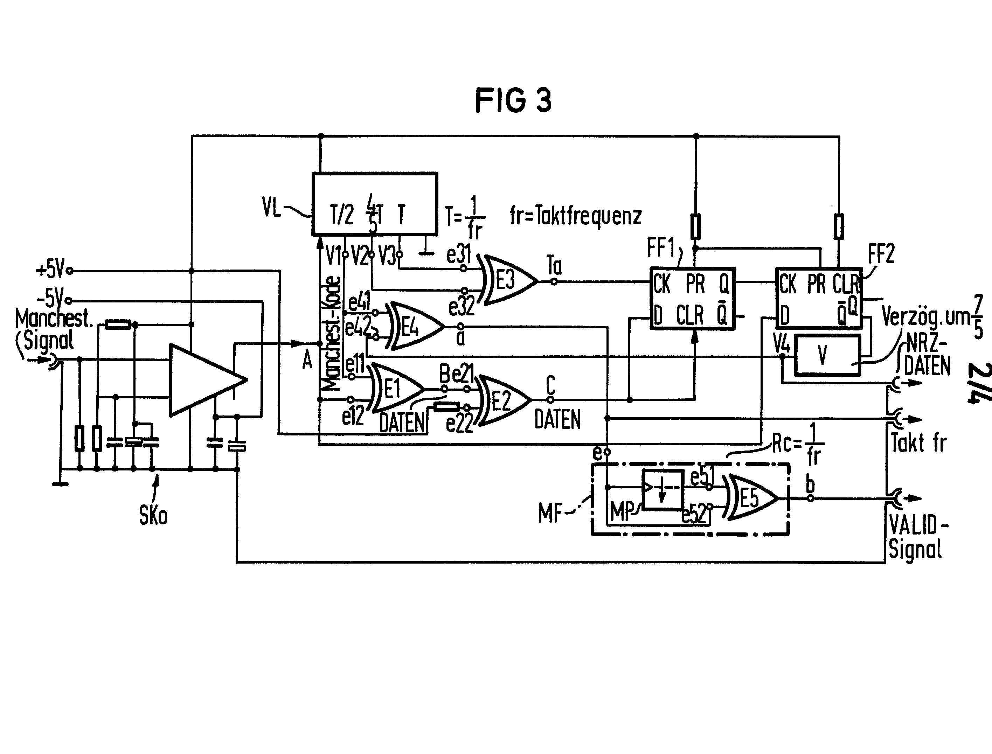

Den Aufbau eines derartigen Spannungskomparator/Manchesterdekodierers SMD zeigt die Figur 3 und wird im folgenden näher beschrieben.

Die manchesterkodierten Daten aus dem Nachverstärker NV des Empfängers E werden dem Spannungskomparator SKo des Spannungskomparator/Manchesterdekodierers SMD zugeführt, dessen Aufbau nicht näher beschrieben zu werden braucht und an dessen Ausgang 8 die manchesterkodierten Daten in Form von TTL-Signalen dem Manchesterdekodierer MD über dessen Eingang A zugeführt werden.

Zur Wiedergewinnung der NRZ-Daten aus den zugeführten manchesterkodierten Daten dienen die Verzögerungsleitungen VL, welche die Signale der manchesterkodierten Daten um $T/2$, $4T/5$ und $T$ verzögern, wobei $T$ die Taktlänge des Taktes bedeutet, sowie die EXOR-Gatter E1 bis E3 und die beiden D-Flipflops FF1 und FF2. Die um $4T/5$ und um $T$ verzögerten manchesterkodierten Daten aus den Ausgängen v2 und v3 der Verzögerungsleitungen VL werden den beiden Eingängen e31, e32 des EXOR-Gatters $E_3$ parallel zugeführt, dessen Ausgangssignal am Ausgang Ta dem Flipflop FF1 über dessem Takteingang CK als Takt zugeführt wird. Die unverzögerten und die um $T/2$ verzögerten manchesterkodierten Daten aus dem Eingang A bzw. dem Ausgang v1 der Verzögerungsleitungen VL werden den beiden Eingängen e11, e12 des EXOR-Gatters $E_1$ parallel zugeführt, dessen Ausgangssignale aus dem

0168770

Ausgang B einem Eingang e21 des EXOR-Gatters $E_2$ als Daten zugeführt wird. Der andere Eingang e22 des EXOR-Gatters $E_2$ liegt konstant auf einem hohen Pegel, der von dem TTL-Pegel von +5 Volt abgeleitet ist. Dadurch wirkt das EXOR-Gatter $E_2$ als Inverter. Die Ausgangssignale aus dem Ausgang C des EXOR-Gatters $E_2$ werden dem D-Flipflop über dessen D-Eingang und CLR-Eingang zugeführt. Das Ausgangssignal aus dem Q-Ausgang des Flipflops FF1 wird dem Takteingang CK des nachgeschalteten D-Flipflops FF2 als Takt zugeführt. Diesem nachgeschalteten Flipflop FF2 werden über dessen D-Eingang die unverzögerten manchesterkodierten Daten zugeführt, und die Ausgangssignale am $\overline{Q}$-Ausgang dieses Flipflops FF2 entsprechen den NRZ-Daten, die allerdings gegen die bei A eingegebenen manchesterkodierten Daten und damit auch den Takt mit der Taktfrequenz $f_T = 1/T$ um T/5 phasenverschoben sind. Diese Phasenverschiebung kann durch eine Verzögerung um T/5 in einem Verzögerungsglied V beseitigt werden, das für die Rückgewinnung des Taktes und des das jeweilige Datenpaket begrenzenden Validsignals erforderlich ist. Die beiden D-Flipflops FF1 und FF2 haben im wesentlichen die Aufgabe, die Daten im Rhythmus des Taktes zu regenerieren. Entsprechend sind sie geschaltet und entsprechend werden ihnen Takt- und Datensignale zugeführt.

Für die EXOR-Gatter E1 bis E3 kann beispielsweise der Baustein SN 74 S 86 und für die D-Flipflops mit dem Baustein der SN 74 S 74 der Fa. Texas Instruments Inc. verwendet werden (siehe z.B. The TTL-Data Book, S. 209 bzw. S. 76; die Ein- und Ausgänge des D-Flipflops sind wie auf S. 76 des genannten Buches bezeichnet).

Die Arbeitsweise des Spannungskomparator/Manchesterdekodierers SMD in Figur 3 zur Wiedergewinnung der

0168770
84 P 1521 E

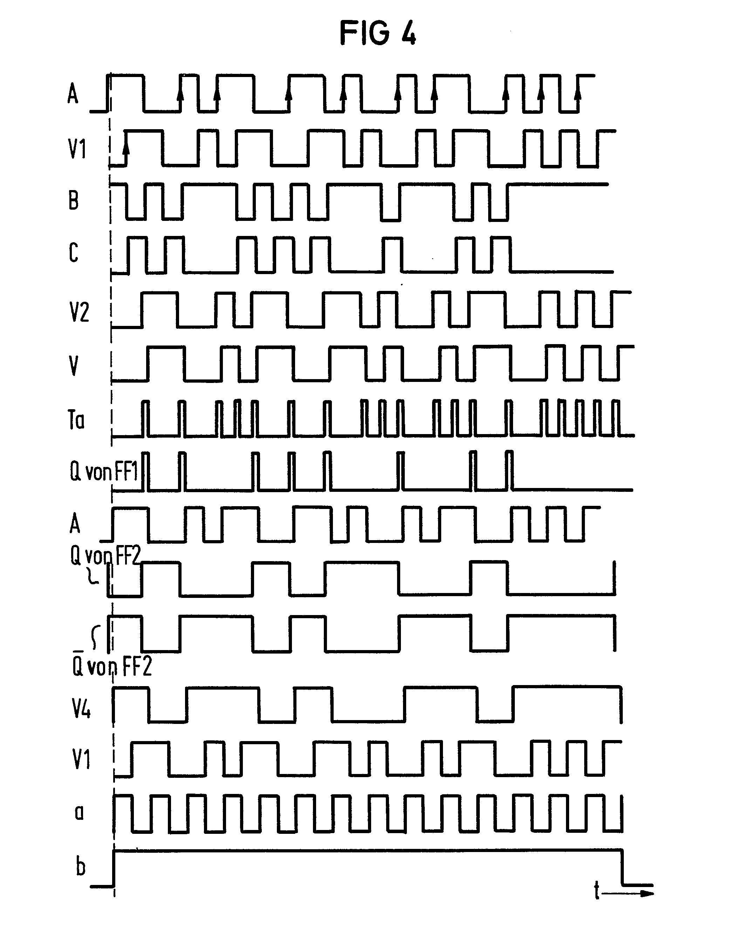

NRZ-Daten wird anhand des Impulsdiagramms nach Figur 4 näher erläutert. In diesem Diagramm sind untereinander über der Zeit t Impulszüge dargestellt, wie sie der Reihe nach am Eingang A, am Ausgang $v_1$ der Verzögerungsleitungen VL, am Ausgang B des EXOR-Gatters E1, am Ausgang C des EXOR-Gatters $E_2$, am Ausgang $v_2$ der Verzögerungsleitungen VL, am Ausgang $v_3$ der Verzögerungsleitungen VL, am Ausgang Ta des EXOR-Gatters $E_3$, am Q-Ausgang des ersten D-Flipflops FF1, in Wiederholung am Eingang A, am Q-Ausgang des nachgeschalteten D-Flipflops FF2 und am $\overline{Q}$-Ausgang dieses Flipflops vorliegen. Die folgenden vier Impulszüge betreffen andere Schaltungsteile, auf die später noch Bezug genommen wird.

Am Eingang A liege beispielsweise die Impulsfolge III nach Figur 2 an, welche die dort angegebene Bitfolge manchesterkodiert darstellt. Die um T/2 verzögerte Impulsfolge bei v1 und die Impulsfolge bei A werden durch das EXOR-Gatter $E_1$ verknüpft, woraus sich die Impulsfolge bei B ergibt, die durch das EXOR-Gatter $E_3$ invertiert wird, woraus sich die Impulsfolge bei C ergibt. Diese Impulsfolge bei C, welche die Dateninformation trägt, wird dem D-Eingang des D-Flipflops FF1 zugeführt und zugleich auch dem Löscheingang CLR dieses Flipflops.

Die gegenüber der Impulsfolge A um 4T/5 verzögerte Impulsfolge bei v2 und die um die volle Taktlänge T verzögerte Impulsfolge bei v3 wird durch das EXOR-Gatter $E_3$ verknüpft, woraus sich die Impulsfolge bei Ta ergibt, die als Taktimpulsfolge dem Takteingang CK des ersten D-Flipflops FF1 zugeführt wird. Aufgrund seiner Eigenschaft als D-Flipflop schaltet dieses erste Flipflop FF1 so, daß an seinem Ausgang Q die Impulsfolge entsteht, die in der Figur 4 bei Q von FF1 dargestellt ist. Aufeinanderfolgende Impulse dieser Impulsfolge bei Q von

0168770

FF1 haben einen Abstand voneinander, der gleich der
Impuls- oder Taktdauer T oder einem ganzzahligen
Vielfachen davon ist, und sie markieren zeitlich die
Anstiegs- und Abfallsflanken der zugehörigen Impulse der
ursprünglichen NRZ-Daten.

Diese Impulsfolge bei Q von FF1 wird an den Takteingang CK des nachgeschalteten D-Flipflops FF2 angelegt,
an dessen D-Eingang die manchesterkodierten Daten bei A
unverzögert anliegen. Das nachgeschaltete Flipflop FF2
schaltet aufgrund seiner D-Eigenschaft so, daß an seinem
$\overline{Q}$-Ausgang die ursprünglichen NRZ-Daten (siehe Diagramm
II in Figur 2) entstehen. Die Impulsfolge bei $\overline{Q}$ von FF2
in Figur 4 ist gegenüber der Impulsfolge der ursprünglichen NRZ-Daten um 1/5T phasenverschoben, und zwar im
Sinne einer Voreilung. Diese kann durch das Verzögerungsglied V ausgeglichen werden, aus dessen Ausgang v4
die ursprünglichen NRZ-Daten in der Phase des Taktes
entnommen werden, die in der Figur 4 bei v4 dargestellt
sind und die genau der Impulsfolge II in Figur 2 entsprechen.

Die wiedergewonnenen NRZ-Daten aus dem Ausgang v4 werden
auch zur Wiedergewinnung des ursprünglichen Taktes in
einer Taktrückgewinnungsschalteinrichtung verwendet, die
aus einer Verzögerungsleitung zum Verzögern eines
Signals um die halbe Taktlänge T/2 und einem EXOR-Gatter
$E_4$ besteht, das wieder mit dem Baustein SN 74 S 86
realisiert werden kann.

Eine Verzögerung um T/2 ist in den Verzögerungsleitungen VL bereits vorhanden und sie kann deshalb verwendet werden. Einem Eingang e41 des EXOR-Gatters $E_4$ werden
die bei A eingegebenen und um T/2 verzögerten manchesterkodierten Daten zugeführt, während dem anderen
Eingang e42 des EXOR-Gatters $E_4$ die NRZ-Daten aus dem Ausgang v4 des Verzögerungsgliedes V unverzögert zugeführt werden. In der Figur 4 sind dies die Impulsfolgen bei v1 bzw. v4. Am Ausgang a des EXOR-Gatters $E_4$ wird dann unmittelbar die Taktimpulsfolge des ursprünglichen Taktes ausgegeben, die in der Figur 4 bei a dargestellt ist.

Das bei b in Figur 4 dargestellte Validsignal erhält man aus den Taktimpulsen bei a durch den monostabilen Multivibrator MF. Dieser wird durch die Taktimpulse aus a getriggert und seine Zeitkonstante ist durch die Dauer der Taktimpulsfolge bestimmt, wobei das Ausgangssignal des monostabilen Multivibrators MF dem Validsignal entspricht. Der konkrete Aufbau des monostabilen Multivibrators wird später im Zusammenhang mit ähnlichen Multivibratoren noch beschrieben.

Mit der Schalteinrichtung nach Figur 3 können danach nicht nur die NRZ-Daten zurückgewonnen werden, sondern auch der Takt und das Validsignal, die zur Verarbeitung der Daten benötigt werden. Jeder Teilnehmer, der am optischen Sternbus mit dem Sternkoppler SK beteiligt ist, weist einen Empfänger E und einen Sender S mit dem dazugehörigen Manchesterkodierer, Manchesterdekodierer und Verstärker auf.

Für die störungsfreie Kommunikation der Teilnehmer am optischen Sternbus ist es sehr wichtig, daß der Buszustand jedem Teilnehmer ersichtlich ist. Er muß folgende Zustände erkennen können:
a) Bus ist frei,
b) Bus ist belegt, und
c) es findet Datenkollision in dem Bus statt.

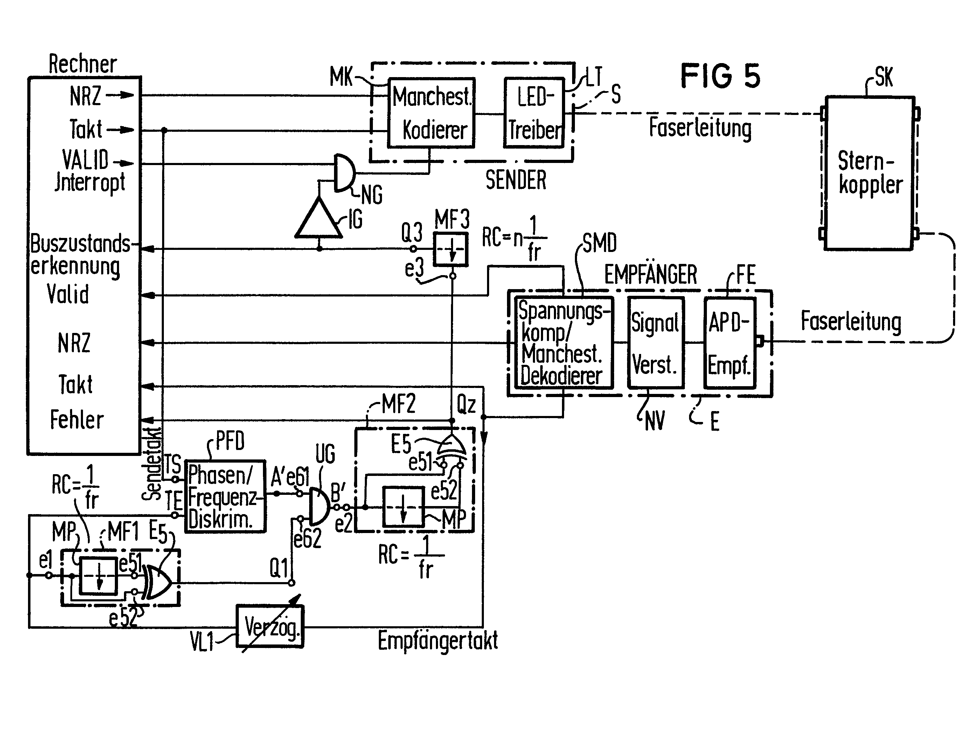

Der rückgewonnene Takt, dessen Dauer genau mit der Dauer der Datenpakete übereinstimmt, die durch das Validsignal bestimmt wird, ermöglicht eine relativ einfache Buszustandserkennung. Der schematische Aufbau der entsprechenden Buszustandserkennungsschaltung ist in der Fig. 5 dargestellt. Die Schaltung ist in einen Sternbus nach Figur 1 eingebaut.

Das Hauptmerkmal für die Buszustandserkennung ist ein Phasen/Frequenz-Diskriminator PFD, dem einerseits der einem Sender S zugeführte Sendetakt, mit dem die ausgesandten Daten getaktet werden und der beispielsweise von einem Rechner erzeugt wird, und andererseits ein Empfängertakt zugeführt wird, der von dem Spannungskomparator/ Manchesterdekodierer SMD im zugeordneten Empfänger E erzeugt oder wiedergewonnen wird. Der vom Rechner erzeugte Sendetakt wird dem Phasen/Frequenz-Diskriminator PFD über einen Eingang $T_S$ und der Empfangstakt aus dem Empfänger E über einen Eingang $T_E$ zugeführt. Ein Ausgang A' des Phasen/Frequenz-Diskriminators PFD ist null, wenn Sende- und Empfangstakt an beiden Eingängen $T_S$ und $T_E$ sowohl in der Frequenz als auch in der Phase exakt übereinstimmen. In der Frequenz können die Takte an den Eingängen $T_S$ und $T_E$ des Phasen/Frequenz-Diskriminators PFD nur dann genau übereinstimmen, wenn der am Eingang $T_S$ anliegende Sendetakt und der am Eingang $T_E$ anliegende Empfängertakt zum gleichen Teilnehmer gehören, d.h. wenn der an den Eingang $T_E$ angelegte Empfängertakt aus den vom eigenen Sender S abgegebenen Daten stammt, die mit dem am Eingang $T_S$ anliegenden Sendetakt getaktet worden sind (die Taktfrequenzen der einzelnen Teilnehmer unterscheiden sich geringfügig, da die Taktgeneratoren der verschiedenen Teilnehmer nicht untereinander gekoppelt sind).

Gleicht man diese beiden Takte an den Eingängen $T_S$ und $T_E$, die sich wegen der Laufzeit über die optische Verbindung und Schaltelementen in der Phase unterscheiden können, mit Hilfe eines Verzögerungsgliedes $VL_1$ auf null ab, so daß sie phasengleich sind, wird der Ausgang A' des Phasen/Frequenz-Diskriminators PFD immer null, wenn die Signale des eigenen Senders S empfangen werden.

Diese logische Null wird auch dann als logische Ø über ein UND-Gatter UG weitergegeben, wenn ein monostabiler Multivibrator MF1 wegen des an seinem Eingang e1 entstehenden Empfängertaktes an seinem Ausgang $Q_1$ auf logisch 1 schaltet. Da der Ausgang B' des UND- Gatters UG logische Ø hat, bleiben auch der Ausgang $Q_2$ eines mit seinem Eingang e2 mit dem Ausgang B' des UND-Gatters UG verbundenen monostabilen Multivibrators MF2 und der Ausgang $Q_3$ eines mit seinem Eingang e3 mit dem Ausgang $Q_2$ des zweiten monostabilen Multivibrators MF2 verbundenen dritten monostabilen Multivibrators MF3 auf logisch Ø.

Die logische Ø am Ausgang $Q_3$ des dritten monostabilen Multivibrators MF3 signalisiert, daß der Bus mit eigenen Daten belegt ist. Die logische Ø am Ausgang $Q_3$ des dritten monostabilen Multivibrators MF3 erscheint auch dann, wenn der Bus überhaupt nicht belegt ist, da in diesem Fall, obwohl am Ausgang A' des Phasen/Frequenz-Diskriminators PFD der Sendetakt erscheint, der Ausgang B' des UND-Gatters UG auf logisch Ø bleibt und weil der Ausgang $Q_1$ des ersten monostabilen Multivibrators MF1 wegen des fehlenden Empfängertaktes aus dem Empfänger E auf logisch Ø bleibt. Beim Empfang eines Signals im Empfänger E, das nicht von dem eigenen Sender S herkommt, sondern von einem anderen Sender, sind nach der Dekodierung sowohl die Taktfrequenz des Empfängertaktes aus dem Emp-

84 P 0168770

fänger E als auch dessen Phase von der Taktfrequenz und der Phase des an dem Eingang $T_S$ des Phasen/Frequenz-Diskriminators PFD anliegenden Sendetaktes des eigenen Senders S verschieden. Dadurch erscheint am Ausgang A' des Phasen/Frequenz-Diskriminators PFD eine Impulsfolge, deren Impulslänge eine Funktion der Frequenz- und Phasendifferenz der an dem Eingang $T_S$ bzw. $T_E$ des Phasen/Frequenzdiskriminators PFD anliegenden Takte ist.

Da der Ausgang $Q_1$ des ersten monostabilen Multivibrators MF1 beim Vorhandensein eines Empfängertaktes am Eingang $T_E$ und damit auch an seinem Eingang $e_1$ auf logisch 1 schaltet, wird das Impulssignal am Ausgang A' des Phasen/Frequenz-Diskriminators PFD bis zum Ausgang B' des UND-Gatters UG übertragen. Die logische 1 am Ausgang B' des UG wird über den zweiten monostabilen Multivibrator MF2 und den dritten monostabilen Multivibrator MF3 weitergegeben. Die logische 1 am Ausgnag $Q_3$ des dritten monostabilen Multivibrators MF3 bedeutet, daß der Bus von einem weiteren Teilnehmer belegt ist.

Da jeder Teilnehmer am optischen Sternbus ebenfalls die Buszustandserkennungsschaltung besitzt, die vorstehend beschrieben wurde, entsteht diese logische 1 bei jedem Teilnehmer, außer bei den sendenden Teilnehmern. Wie bereits beschrieben worden ist, liegt der Ausgang $Q_3$ des dritten monostabilen Multivibrators MF3 auf logisch Ø. Auf diese Weise sind alle Teilnehmer informiert, daß der optische Sternbus belegt ist.

Gleichzeitig kann man durch schaltungstechnische Maßnahmen verhindern, daß sich für die Zeit der Belegung des Busses noch ein Sender einschaltet. Dazu wird der Ausgang $Q_3$ des dritten monostabilen Multivibrators MF3 über einen Inverter IG einem Eingang e71 eines NAND-Gatters NG zugeführt, an dessen zweitem Eingang e72 das dem Manchesterkodierer MK des eigenen Senders S zuzuführende Validsignal gegeben wird. Das Senden der Daten vom Manchesterkodierer MK zum LED-Treiber LT ist dann nur möglich, wenn $Q_3$ auf logisch Ø liegt und ein Validsignal gesendet wird.

Wegen der Laufzeit der Daten von einem Sender zu einem Empfänger (einige µs) kann es vorkommen, daß mehrere Teilnehmer gleichzeitig den Bus belegen wollen. In jeder Buszustandserkennungsschaltung der verschiedenen Teilnehmer wird auf bereits beschriebene Weise die Kollision erkannt und am Ausgang $Q_3$ des dritten monostabilen Multivibrators MF3 bei allen Teilnehmern durch logisch 1 angezeigt.

Die Wirkungsweise der Buszustandserkennungsschaltung nach Figur 5 kann durch folgende Wahrheitstabelle für den Buszustand charakterisiert werden:

| $T_S$ | $T_E$ | $\Delta\varphi$ | $\Delta f_T$ | A' | $Q_1$ | B' | $Q_2$ | $Q_3$ | Buszustand |
|---|---|---|---|---|---|---|---|---|---|
| Sende-takt | Empfänger-takt aus eigenem Sender | 0 | 0 | 0 | 1 | 0 | 0 | 0 | Bus frei (eigene Belegung) |
| Sende-takt | 0 | - | Sende-takt | Sende-takt | 0 | 0 | 0 | 0 | Bus frei |
| Sende-takt | Empfänger-takt aus anderem Sender | 0 | Sende-takt minus Empfänger-takt aus anderem Sender | ЛЛ | 1 | ЛЛ | 1 | 1 | Bus belegt/Kollision |

$\Delta\varphi$ = Phasendifferenz, $\Delta f_T$ = Taktfrequenzdifferenz

Der monostabile Multivibrator MF in Figur 3 und die beiden monostabilen Multivibratoren MF1 und MF2 sind zweckmäßigerweise jeweils aus einem EXOR-Gatter $E_5$ und einem Monoflop MP mit einer Zeitkonstante $T = RC = 1/f_T$ gebildet, der zwischen dem Eingang e, e1 bzw. e2 des betreffenden Multivibrators MF, MF1 bzw. MF2 und einem Eingang e51 des EXOR-Gatters $E_5$ geschaltet ist, während der andere Eingang e52 des EXOR-Gatters $E_5$ direkt mit dem Eingang e, e1 bzw. e2 des betreffenden monostabilen Multivibrators verbunden ist. Der Ausgang des EXOR-Gatters $E_5$ eines jeden monostabilen Multivibrators MF, MF1 bzw. MF2 bildet den Ausgang b, $Q_1$ bzw. $Q_2$ des betreffenden Multivibrators. Der Monoflop MP jedes dieser monostabilen Multivibratoren MF, MF1 bzw. MF2 bewirkt eine Phasenverschiebung des am Eingang e, e1 bzw. e2 des jeweiligen Multivibrators angelegten Taktes derart, daß die beiden Eingänge e51, e52 des EXOR-Gatters E5 stets auf verschiedenen logischen Pegeln liegen, so lange die zugeführten Taktsignale dauern.

Da die Monoflops MP der monostabilen Multivibratoren MF1 und MF2 in Figur 5 eine Zeitkonstante von $T = RC = 1/f_T$ aufweisen, wirkt sich jede Taktveränderung, die durch Übertragungsfehler entstehen kann, als Kollision aus. Da aber jeder Bitfehler oder jeder Bitausfall noch keine Kollision oder freien Bus bedeuten muß, wird in dem dritten monostabilen Multivibrator MF3 die Zeitkonstante so eingestellt, daß nur Fehler, die über mehrere Bits dauern, als Kollision erkannt werden. Die Fehler, die nur eine Zeitdauer dauern, die kleiner ist als die Zeitkonstante des dritten monostabilen Multivibrators MF3 , werden über eine Fehlerleitung als Übertragungsfehler registriert. Die Zeitkonstante des dritten monostabilen Multivibrators wird zweckmäßigerweise gleich einem ganzzahligen Vielfachen der Impuls- und Taktdauer T gewählt.

11 Patentansprüche
5 Figuren

0168770 E
84 P 1529

Patentansprüche

1. Optischer Datenbus, insbesondere mit statistischem Zugriffsverfahren, zur Übertragung von Daten zwischen Sendern (S) und Empfängern (E) in Form getakteter Signale, insbesondere NRZ-Daten, wobei jedem Sender (S) ein Kodierer zugeordnet ist, der die vom Sender (S) auf den Datenbus abzugebenden Signale in einer bestimmten Art kodiert, und wobei jedem Empfänger (E) eine Dekodiereinrichtung zur Dekodierung der dem Empfänger (E) aus dem Datenbus zuzuführenden Daten und Zurückgewinnung des in den kodierten Daten enthaltenen Taktes vorgeordnet ist, d a d u r c h   g e k e n n z e i c h n e t , daß der Kodierer ein Manchesterkodierer (MK), der die auf den Bus abzugebenden Daten manchesterkodiert und, daß die Dekodiereinrichtung aus einem Manchesterdekodierer (MD) besteht, der die zugeführten manchesterkodierten Daten dekodiert, und daß eine Taktrückgewinnungseinrichtung vorgesehen ist, die aus den manchesterkodierten Daten und den dekodierten Daten den in den manchesterkodierten Daten enthaltenen Takt rückgewinnt.

2. Datenbus nach Anspruch 1, d a d u r c h   g e - k e n n z e i c h n e t , daß der Manchesterdekodierer (MK) drei Verzögerungsleitungen (VL) aufweist, in denen die zugeführten manchesterkodierten Daten um die halbe Taktdauer (T/2), jeweils um eine zwischen der halben und der ganzen Taktdauer liegende Dauer (4T/5) und um die ganze Taktdauer (T) des in den zugeführten Daten enthaltenen Taktes verzögert werden, daß die um die ganze Taktdauer (T) und die um die zwischen der halben und der ganzen Taktdauer liegende Dauer (4T/5) verzögerten Daten durch ein EXOR-Gatter ($E_3$) verknüpft sind, dessen Ausgangssignal am Ausgang (Ta) dem Takteingang (CK) eines D-Flipflops (FF1) zugeführt ist, daß die zugeführten unverzögerten manchesterkodierten Daten und die um die halbe Taktlänge (T/2) verzögerten manchesterkodierten Daten durch ein zweites EXOR-Gatter
($E_1$) verknüpft sind, dessen Ausgangssignal am Ausgang
(B) durch einen Inverter ($E_2$) invertiert und so dem
D-Eingang des einen D-Flipflops (FF1) zugeführt ist, und
daß dem einen D-Flipflop (FF1) ein weiteres D-Flipflop
(FF2) nachgeschaltet ist, dessen Takteingang (CK) das
Ausgangssignal am Q-Ausgang des einen D-Flipflops (FF1)
zugeführt ist, an dessen D-Eingang die zugeführten
manchesterkodierten Daten unverzögert anliegen, und an
dessen $\overline{Q}$-Ausgang die wiedergewonnenen NRZ-Daten entnehmbar sind.

3. Datenbus nach Anspruch 2, d a d u r c h  g e -
k e n n z e i c h n e t , daß der Ausgang (B) des
weiteren EXOR-Gatters ($E_1$) über den Inverter ($E_2$) auch
mit dem Löscheingang (CLR) des einen D-Flipflops (FF1)
verbunden ist, und daß der PRESET-Eingang (PR) sowohl
des einen als auch des nachgeschalteten D-Flipflops
(FF1, FF2) sowie der Löscheingang (CLR) des nachgeschalteten Flipflops (FF2) auf einen hochliegenden
konstanten Spannungspegel eingestellt sind.

4. Datenbus nach Anspruch 2 oder 3, d a d u r c h
g e k e n n z e i c h n e t , daß dem $\overline{Q}$-Ausgang des
nachgeschalteten Flipflops (FF2) ein Verzögerungsglied
(V) nachgeschaltet ist, welches eine Verzögerung um die
Differenz zwischen der ganzen Taktdauer (T) und der zwischen der halben und der ganzen Taktdauer liegenden
Dauer (4T/5) bewirkt und an dessen Ausgang (v4) die
NRZ-Daten in der Phase des Taktes entnehmbar sind, mit
dem die zugeführten Daten getaktet sind.

5. Datenbus nach Anspruch 4, d a d u r c h  g e -
k e n n z e i c h n e t , daß die Taktrückgewinnungseinrichtung ein EXOR-Gatter ($E_4$) aufweist, welches die

NRZ-Daten aus dem Verzögerungsglied (V) und die um die halbe Taktlänge (T/2) manchesterkodierten Daten miteinander verknüpftund an dessen Ausgang (a) der in den zugeführten Daten enthaltene Takt entnehmbar ist.

6. Datenbus nach einem der vorhergehenden Ansprüche, insbesondere nach Anspruch 5, d a d u r c h   g e - k e n n z e i c h n e t , daß der Ausgang (a) des EXOR-Gatters ($E_4$) der Taktrückgewinnungseinrichtung zusätzlich mit einem Eingang (e) eines monostabilen Multivibrators (MF) verbunden ist, dessen Ausgangssignal am Ausgang (b) mit Beginn eines Taktes am Eingang (e) von einem Zustand in einen anderen übergeht und mit dem Ende des zugeführten Taktes wieder in den einen Zustand wechselt.

7. Datenbus nach einem der vorhergehenden Ansprüche, d a d u r c h   g e k e n n z e i c h n e t , daß jedem Paar einander zugeordneter Sender (S) und Empfänger (E) je eine Buszustandserkennungseinrichtung zugeordnet ist, die einen Phasen/Frequenz-Diskriminator (PFD) aufweist, der an einem Eingang ($T_S$) mit dem Sendetakt beaufschlagt ist, mit dem die vom zugeordneten Sender (S) ausgesandten Daten getaktet sind, und an einem zweiten Eingang ($T_E$) mit dem Empfängertakt, der von der Taktrückgewinnungseinrichtung im zugeordneten Empfänger (E) wiedergewonnen und durch ein Verzögerungsglied ($VL_1$) so verzögert ist, daß seine Phase mit der Phase des Sendetaktes übereinstimmt, wenn die Taktrückgewinnungseinrichtung im Empfänger (E) den eigenen Sendetakt vom zugeordneten Sender (S) rückgewinnt, wobei das Ausgangssignal am Ausgang (A') des Phasen/Frequenz-Diskriminators (PFD) null ist, wenn der Sende- und Empfängertakt sowohl in der Frequenz als auch in der Phase exakt übereinstimmen und wobei das Ausgangssignal am Ausgang (A') des Phasen/ Frequenz-Ddiskriminators (PFD) eine Impulsfolge ist,
deren Impulslänge eine Funktion der Frequenz- und
Phasendifferenz zwischen Sende- und Empfängertakt ist,
daß ein erster monostabiler Multivibrator (MF1) vorgesehen ist, an dessen Eingang (e1) der verzögerte Empfängertakt zugeführt ist und dessen Ausgangssignal an
seinem Ausgang ($Q_1$) mit Beginn eines zugeführten Empfängertaktes von logisch Ø auf logisch 1 und mit dem
Ende des Empfängertaktes wieder auf logisch Ø wechselt,
daß das Ausgangssignal des ersten monostabilen Multivibrators (MF1) und das Ausgangssignal des Phasen/Frequenz-Diskriminators (PFD) durch ein UND-Gatter (UG)
miteinander verknüpft sind, daß das Ausgangssignal am
Ausgang (B') des UND-Gatters (UG) einem zweiten monostabilen Multivibrator (MF2) zugeführt ist, dessen
Ausgangssignal  am Ausgang ($Q_2$) mit Beginn einer zugeführten Impulsfolge aus dem UND-Gatter (UG) von logisch
Ø auf logisch 1 und mit dem Ende der Impulsfolge von
logisch 1 auf logisch Ø wechselt, und das für die Buszustandserkennung verwendet ist.


8. Datenbus nach Anspruch 7, d a d u r c h   g e -
k e n n z e i c h n e t , daß das Ausgangssignal am
Ausgang ($Q_2$) des zweiten monostabilen Multivibrators
(MF2) einem vorderflankengesteuerten monostabilen Multivibrator (MF3) mit fester Zeitkonstante von einer oder
mehreren Taktlängen des Sendetaktes zugeführt ist,
dessen Ausgangssignal am Ausgang ($Q_3$) als Buszustandserkennungssignal verwendet ist.


9. Datenbus nach Anspruch 8, d a d u r c h   g e -
k e n n z e i c h n e t , daß das Ausgangssignal am
Ausgang ($Q_2$) des zweiten monostabilen Multivibrators
(MF2) zugleich als Fehlererkennungssignal verwendet
wird, das einen Fehler anzeigt, wenn es kürzer ist als
die Zeitkonstante des dritten monostabilen Multivibrators (MF3).

10. Datenbus nach Anspruch 8 oder 9, d a d u r c h g e k e n n z e i c h n e t , daß das Ausgangssignal am Ausgang ($Q_3$) des dritten monostabilen Multivibrators (MF3) über einen Inverter (IG) einem Eingang eines NAND-Gatters (NG) zugeleitet ist, dessen anderer Eingang mit einem dem zugeordneten Sender (S) zuzuführenden Validsignal beaufschlagt ist, und dessen Ausgangssignal dem Manchesterkodierer dieses Senders (S) als Validsignal zugeführt ist.

11. Datenbus nach einem der vorhergehenden Ansprüche, d a d u r c h g e k e n n z e i c h n e t , daß ein monostabiler Multivibrator (MF, MF1, MF2), dessen Eingang (e, e1, e2) mit einer Impulsfolge beaufschlagt ist und dessen Ausgangssignal an seinem Ausgang (b, $Q_1$, $Q_2$) mit Beginn der Impulsfolge von einem Zustand in einen anderen und mit dem Ende der Impulsfolge wieder in den einen Zustand übergeht aus einem EXOR-Gatter ($E_5$) mit zwei Eingängen (e51, e52) besteht, von denen einer (e52) direkt mit dem Eingang (e, e1, e2) des monostabilen Multivibrators (MF, MF1, MF2) verbunden ist, und daß dieser letztgenannte Eingang (e, e1, e2) über einen Monoflop (MP) mit dem anderen Eingang (e51) des EXOR-Gatters ($E_5$) verbunden ist, dessen feste Zeitkonstante so gewählt ist, daß während der Dauer der Impulsfolge stets voneinander verschiedene Pegel an den Eingängen (e51, e52) des EXOR-Gatters ($E_5$) anliegen, dessen Ausgang den Ausgang (b, $Q_1$, $Q_2$) des monostabilen Multivibrators bildet.

FIG 1

FIG 2

0168770

# FIG 3

0168770

# FIG 4

FIG 5